# EUROPÄISCHE PATENTSCHRIFT

(11) **EP 1 350 423 B1**
(45) Veröffentlichungstag und Bekanntmachung des Hinweises auf die Patenterteilung: **26.03.2008**
(21) Anmeldenummer: 03100187.8
(22) Anmeldetag: 29.01.2003
(51) Int. Cl.: A01D 89/00

(54) **Aufnehmer für landwirtschaftliches Erntegut**
Pick-up for agricultural produce
Ramasseur pour produits agricoles

(30) Priorität: 05.04.2002 DE 10215034
(43) Veröffentlichungstag der Anmeldung: 08.10.2003
(73) Patentinhaber: DEERE & COMPANY, Moline, Illinois 61265-8098 (US)
(72) Erfinder: Gunther, Daniel, 57600, Morsbach (FR)
(74) Vertreter: Holst, Sönke

(56) Entgegenhaltungen:
- DE-B- 1 159 351
- FR-A- 2 502 455
- US-A- 2 388 212
- US-B1- 6 327 840

## Beschreibung

Die Erfindung betrifft einen Aufnehmer für landwirtschaftliches Erntegut mit einem Gehäuse, einer darin angeordneten und gegenüber dem Gehäuse drehbar gelagerten und in Drehung versetzbaren Welle, Zinkenträgern, die sich parallel zur Welle erstrecken, an den Zinkenträgern befestigte Zinken, und mit einem koaxial zur Welle angeordneten Halterungselement, an dem die Zinkenträger aufgenommen sind.

Aufnehmer für landwirtschaftliches Erntegut werden beispielsweise an Ballenpressen, Ladewagen, Schwadern und Feldhäckslern eingesetzt, um auf dem Boden liegendes Gut aufzunehmen. Sie umfassen ein nicht rotierendes, trommelartiges Gehäuse mit Schlitzen, durch die sich gesteuerte oder starre Zinken zum Erfassen des Guts erstrecken. Eine zum Antrieb der Zinken dienende Welle erstreckt sich über die gesamte Breite des Aufnehmers. Ein derartiger Aufnehmer ist beispielsweise in der DE 32 38 210 C beschrieben. Die Welle ist entweder hinreichend steif und somit massiv und kostenträchtig zu dimensionieren, damit sich im mittleren Bereich hinreichend wenig durchbiegt, oder die Wellen werden geteilt und auf ihrer Länge noch ein- oder mehrmals gelagert, wie in der DE 32 38 210 C. Da die die Zinken tragenden Zinkenträger um den Umfang der Welle verteilt sind, müssen sie an den Lagerstellen der Welle ebenfalls geteilt werden. Man muss somit an beiden Seiten der Lagerstellen Befestigungsmittel für die Zinkenträger einsetzen. Dadurch besteht keine Möglichkeit, in der Nähe der Lagerstelle Zinken anzuordnen. Der Aufnehmer arbeitet an diesen Stellen nicht befriedigend.

Ein anderer Aufnehmer ist in der US 2 388 212 A offenbart. Er umfasst ein rotierendes, trommelförmiges Gehäuse, in dem Zinkenträger angeordnet sind, die sich durch Schlitze im Gehäuse erstreckende Zinken haltern. Eine Welle erstreckt sich durch das Gehäuse und rotiert mit ihm. Die Zinkenträger sind drehbar gelagert und werden durch eine Nockenbahn winkelgesteuert. Hier ist die Welle mittig an einer scheibenförmigen Platte befestigt, die auch die Zinkenträger lagert und außen am Gehäuse fixiert ist. Es findet keine Relativbewegung zwischen dem Gehäuse und der Welle statt.

Die DE 1 159 351 A beschreibt eine rotierende Fördertrommel mit auf einer exzentrisch gelagerten Achse angeordneten Fingern. Die stationäre Welle, an der die Achse befestigt ist, wird durch Platten abgestützt, die an der Innenwand des Rohrs fixiert sind. Hier ist der Zinkenträger nur durch die Lagerungen der Welle abgestützt.

Das der Erfindung zu Grunde liegende Problem wird darin gesehen, einen verbesserten Aufnehmer bereitzustellen, der die genannten Nachteile nicht oder nur in einem verminderten Maß aufweist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, auf der Welle ein zu ihr koaxiales Halterungselement anzubringen, an dem die die Zinken haltenden Zinkenträger befestigt sind. Das Halterungselement ist am Gehäuse drehbar abgestützt.

Auf diese Weise wird eine kompakte Lagerung für die Welle bereitgestellt. Die inneren Enden der Zinkenhalter können sich bis unmittelbar vor das Halterungselement erstrecken, so dass an der Lagerstelle der Welle am Gehäuse keine unerwünschte Lücke zwischen benachbarten Zinkenreihen entsteht.

Obwohl denkbar wäre, zwischen dem Gehäuse und dem Halterungselement ein Gleitlager vorzusehen, ist eine drehbare Lagerung bevorzugt. Sie kann wenigstens eine drehbare Walze umfassen, deren Drehachse parallel zur Welle verläuft. Die Walze oder Walzen sind zweckmäßigerweise mit einem Wälzlager ausgestattet. Die Walze kann mit dem Gehäuse verbunden sein und am Umfang oder einer anderen geeigneten Fläche des Halterungselements abrollen.

Es ist denkbar, dass sich die Welle im mittleren Bereich, in dem das Halterungselement angeordnet ist, durchbiegt. Um dann eine Beschädigung der Lagerung des Halterungselements zu vermeiden, bietet es sich an, zwei (oder mehr) am Umfang des Halterungselements anliegende Walzen an einem Lagerelement zu befestigen, das seinerseits um eine parallel zur Welle verlaufende Schwenkachse pendelnd am Gehäuse gelagert ist. Das pendelnde Lagerelement kann eine eventuelle Unrundheit oder Verbiegung der Welle durch die Pendelbewegung ausgleichen. Bei anderen Ausführungsformen ist das Lagerelement starr mit dem Gehäuse verbunden, um eine feste Lagerung zu bilden.

Es wäre aber auch möglich, mehrere Walzen am Umfang des Halterungselements zu befestigen, die am Gehäuse abrollen. Bei einer bevorzugten derartigen Ausführungsform ist die Walze innerhalb einer Öffnung des Halterungselements angeordnet und jeweils ein Abschnitt der Walze erstreckt sich durch ein radiales Fenster der Öffnung, so dass er radial über die benachbarte Fläche des Halterungselements hinausragt und auf dem Gehäuse bzw. einem damit verbundenen Lagerelement abrollen kann.

Das Halterungselement kann auch in axialer Richtung der Welle fixiert werden, indem es mit überstehenden Bereichen und einer dazwischen angeordneten Nut ausgestattet wird. In diese Nut kann ein geeigneter Bereich des Gehäuses bzw. eines damit verbundenen Lagerelements eingreifen. Analog kann das Halterungselement mit einem überstehenden Bereich versehen werden, der in eine mit dem Gehäuse verbundene Nut eintaucht.

Vorzugsweise sind die Zinkenträger am Halterungselement schwenkbar angelenkt. Sie sind an ihrem anderen Ende mit einer geeigneten Steuerung verbunden, die den Drehwinkel des Zinkenträgers gegenüber der Welle in Abhängigkeit vom jeweiligen Drehwinkel der Welle verstellt. Es bietet sich insbesondere bei einem derartigen Aufnehmer an, die Zinkenträger an den beiden Seiten des Halterungselements zueinander winkelversetzt anzuordnen. Dadurch können die Zinkenträger unproblematisch unabhängig voneinander befestigt werden. Es wäre aber auch - sowohl bei gesteuerten wie ungesteuerten Zinken - denkbar, dass sich die Zinkenträger durch das Halterungselement hindurch erstrecken und daran gelagert bzw. befestigt sind.

Bei Aufnehmern mit gesteuerten Fingern ist das Halterungselement in der Regel drehfest mit der Welle verbunden, um die Bewegung von der Welle auf die Zinkenträger zu übertragen. Eine drehfeste Befestigung erübrigt sich, wenn die Zinken nicht gesteuert sind oder die Zinkenträger an einer anderen Stelle angetrieben werden. In diesem Fall muss die Welle nicht angetrieben sein.

Es kann ein einziges Halterungselement verwendet werden, das etwa in der Mitte des Aufnehmers angeordnet ist. Es können aber auch mehrere über die Breite des Aufnehmers verteilte Halterungselemente verwendet werden, insbesondere bei Aufnehmern mit nicht gesteuerten Zinken. Bei Aufnehmern mit gesteuerten Zinken können ebenfalls mehrere Halterungselemente über die Breite des Aufnehmers verteilt werden. Bei ihnen können die Zinkenträger links und rechts eines Halterungselements antriebsmäßig verbunden werden, um die Schwenkbewegung der Zinkenträger von außen nach innen zu übertragen. Dazu ist im einfachsten Fall eine starre Kopplung benachbarter Zinkenträger links und rechts des Halterungselements denkbar. Es wäre aber auch eine Kopplung durch Zahnräder, Exzenter o.ä. denkbar.

In den Zeichnungen sind zwei nachfolgend näher beschriebene Ausführungsbeispiele der Erfindung dargestellt. Es zeigt:
- Fig. 1: eine perspektivische Ansicht einer ersten Ausführungsform einer mittleren Lagerung eines Aufnehmers, und
- Fig. 2: eine perspektivische Ansicht einer anderen Ausführungsform der mittleren Lagerung eines Aufnehmers.

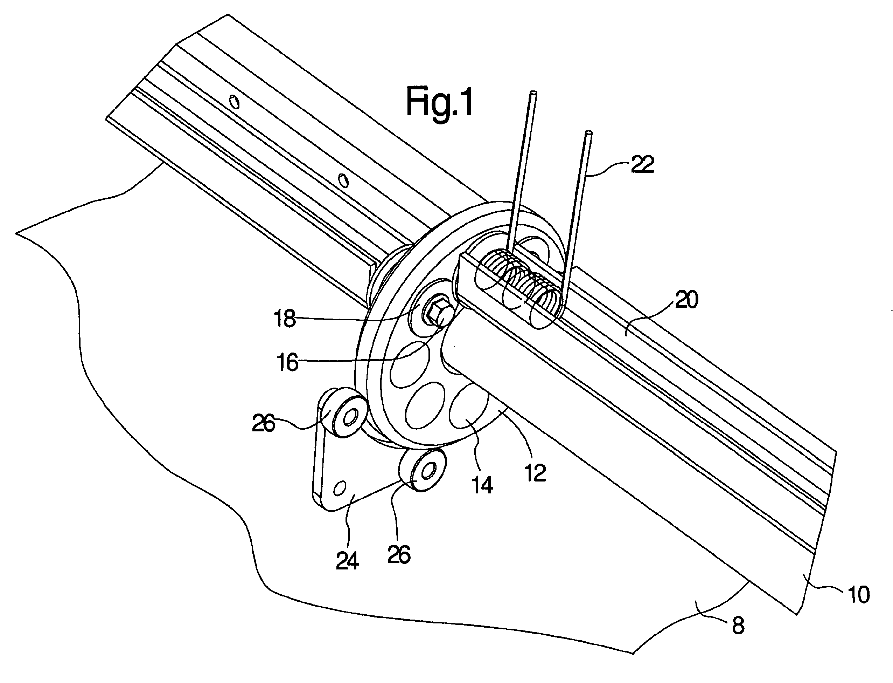

In der Figur 1 ist eine perspektivische Ansicht des mittleren Abschnitts eines Aufnehmers für Erntegut - einer so genannten Pick-Up - dargestellt, der an Ballenpressen, Ladewagen, Schwadern oder Feldhäckslern verwendbar ist. Der Aufnehmer umfasst eine zentrale, zylindrische Welle 10, die sich über die Breite des Aufnehmers erstreckt und an ihren Enden am Gehäuse 8 des Aufnehmers gelagert ist. In der Mitte der Welle 10 ist ein koaxial zur Welle 10 angeordnetes, kreisförmiges Halterungselement 12 mit acht gleichmäßig um den Umfang der Welle 10 verteilten Bohrungen 14 befestigt, die parallel zur Längsachse der Welle 10 verlaufen. In den Bohrungen 14 sind Lagerungen 18 angeordnet. Axial durch die Lagerungen 18 erstrecken sich Schrauben 16. Die Gewinde der Schrauben 16 sind in entsprechende Gewinde in den Enden U-förmiger Zinkenträger 20 eingeschraubt, die sich parallel zur Welle 10 erstrecken. Durch die Schrauben 16 und die Lagerungen 18 sind die Zinkenträger 20 um ihre Längsachse drehbar am Halterungselement 12 festgelegt.

An den Zinkenträgern 20 sind Zinken 22 befestigt, die aus federndem Material hergestellt sind und einen spiralförmigen Abschnitt umfassen, der mit dem Zinkenträger 20 verbunden ist und an dessen Enden sich nach außen erstreckende Abschnitte vorgesehen sind.

Es sind auf jeder Seite des Halterungselements 12 vier Zinkenträger 20 angeordnet, von denen in der Zeichnung aus Gründen der Übersichtlichkeit nur je zwei dargestellt sind. Die auf der linken Seite des Halterungselements 12 angeordneten Zinkenträger 20 sind gegenüber den ihnen jeweils benachbarten, auf der rechten Seite des Halterungselements 12 angeordneten Zinkenträgern 20 um je 45° versetzt.

Die Zinken 22 erstrecken sich durch (in der Figur aus Gründen der Übersichtlichkeit nicht eingezeichnete) Schlitze im Gehäuse 8 und sind eingerichtet, Erntegut aufzunehmen und nach oben hinten zu fördern, wenn der Aufnehmer über ein Feld bewegt wird, auf dem das Erntegut in der Regel in einem Schwad liegt. Dazu ist die Welle 10 mit einem Antrieb gekoppelt, der sie in Drehung versetzt. Die Zinkenhalter 20 mit den Zinken 22 werden über die Welle 10, das drehfest mit der Welle 10 verbundene Halterungselement 12 und die Lagerungen 18 angetrieben, so dass sie sich um die Welle 10 drehen. Die Winkelstellung der Zinkenträger 20 gegenüber der Welle 10 wird an den äußeren Enden durch an sich bekannte Einrichtungen (Exzentersteuerungen bzw. Kurvenbahnen) gesteuert. Es sind aber auch Ausführungsformen mit nicht gesteuerten Zinken 22 denkbar, bei denen die Zinkenträger 20 starr am Halterungselement 12 befestigt sind. Dann erübrigt sich die winkelversetzte Anbringung der Zinkenträger 20 auf den beiden Seiten des Halterungselements 12.

Das Halterungselement 12 ist durch ein Lagerelement 24 am Gehäuse 8 des Aufnehmers abgestützt. Das Lagerelement 24 umfasst zwei zylindrische Walzen 26, deren Achsen sich parallel zur Längsachse der Welle 10 erstrecken. Die Walzen 26 sind drehbar am Lagerelement 24 befestigt. Der Umfang der Walzen 26 rollt auf dem Umfang des Halterungselements 12 ab. Das Lagerelement 24 ist fest oder um eine sich parallel zur Welle 10 erstreckende Achse pendelnd am Gehäuse 8 des Aufnehmers angebracht. Es kann auch ein zweites Lagerelement dem eingezeichneten Lagerelement 24 der Welle 10 diametral gegenüber mit dem Gehäuse 8 verbunden werden. Das Halterungselement 12 und das Lagerelement 24 ermöglichen eine mittige Abstützung der Welle 10 und einen relativ geringen Abstand der Zinkenträger 20 links und rechts des Halterungselements 12.

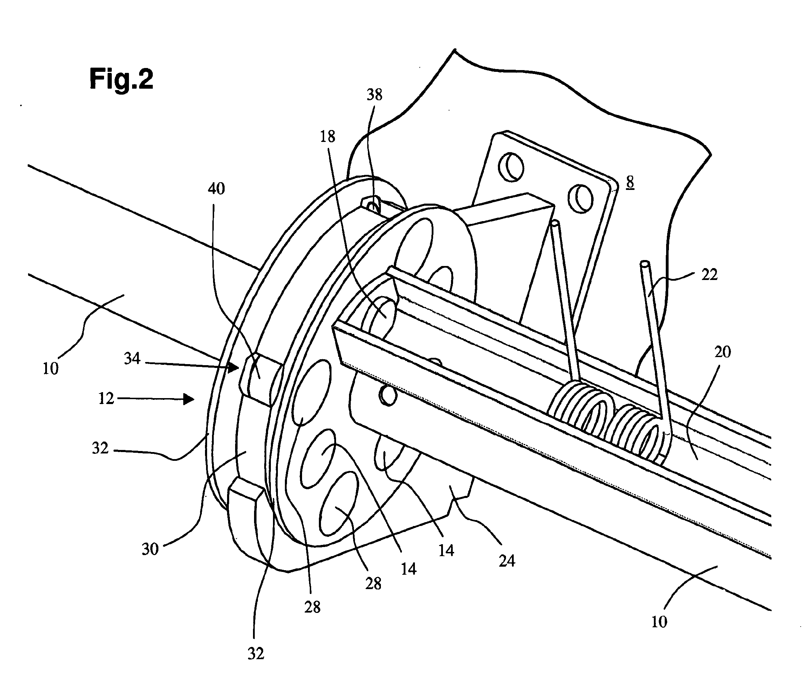

In der Figur 2 ist eine zweite Ausführungsform der mittleren Lagerung des Aufnehmers dargestellt. Der ersten Ausführungsform entsprechende Elemente sind mit denselben Bezugszeichen gekennzeichnet. Die Lagerung gemäß Figur 2 umfasst ebenfalls ein Halterungselement 12, das eine mittige, axiale Öffnung aufweist, durch das sich die Welle 10 erstreckt. Weiterhin sind um diese mittige Öffnung vier Öffnungen oder Bohrungen 14 verteilt, deren Achsen sich parallel zur Welle 10 erstrecken. Diese Bohrungen 14 nehmen jeweils eine Lagerung 18 für einen Zinkenträger 20 auf. Die Zinkenträger 20 auf der einen Seite des Halterungselements 12 sind hier jedoch nicht um 45° versetzt zu den Zinkenträgern 20 auf der jeweils anderen Seite des Halterungselements 12 angebracht, sondern die Bohrungen 14 mit den Lagerungen 18 haltern jeweils die Zinkenträger 20 auf beiden Seiten des Halterungselements 12. Aus Gründen der Übersichtlichkeit ist in der Figur 2 nur ein Zinkenträger 20 auf der rechten Seite des Halterungselements 12 dargestellt; es sind jedoch auf jeder Seite vier Zinkenträger 20 vorgesehen. Es wäre weiterhin denkbar, dass sich die Zinkenträger 20 durch die Bohrungen 14 hindurch erstrecken. Die Zinkenträger 20 sind an ihren verbleibenden Enden in einer Art befestigt und antreibbar, wie oben bezüglich der Ausführungsform nach Figur 1 beschrieben wurde.

Um jeweils 45° zu den Bohrungen 14 versetzt sind vier weitere kreiszylindrische Öffnungen 28 im Halterungselement 12 vorgesehen. Ihre Mittelpunkte sind weiter von der Welle 10 beabstandet als die der Bohrungen 14. Die Öffnungen 28 weisen einen kleineren Durchmesser auf als die Bohrungen 14, könnten aber auch denselben oder einen größeren Durchmesser haben.

Die Außenfläche des Halterungselements 12 umfasst eine mittige Nut 30, die sich zwischen zwei radial überstehenden, flanschartigen Bereichen 32 befindet. Die Öffnungen 28 sind derart angeordnet, dass sich von den Öffnungen 28 in die Nut 30 hinein erstreckende Fenster 34 ergeben. Die Öffnungen 28 sind außerdem keine Durchgangsbohrungen, sondern weisen an ihren in der Figur 2 links eingezeichneten Stirnseiten Böden 36 auf, in denen sich mittige Löcher 38 befinden. In jeder der Öffnungen 28 ist eine Walze 40 drehbar gelagert. Die Walzen 40 sind über Kugel- oder andere Wälzlager und sich durch die Löcher 38 erstreckende Schrauben mit den Böden 36 verbunden. Die Walzen 40 können sich somit in den Öffnungen 28 frei drehen und Abschnitte ihrer Außenflächen erstrecken sich durch die Fenster 34 hindurch in die Nut 30. Diese Abschnitte erstrecken sich radial über die Nut 30 hinaus, sind somit weiter von der Drehachse der Welle 10 beabstandet als die äußere Oberfläche des Halterungselements 12 im Bereich der Nut 30.

Mit dem Gehäuse 8 ist ein stationäres Lagerelement 24 verbunden, im Konkreten verschraubt. Seine entlang der Längsachse der Welle 10 gemessene Breite ist geringfügig kleiner als die der Nut 30. Das Lagerelement 24 erstreckt sich an der Unterseite des Halterungselements 12 und umschließt die Nut 30 um einen Winkelbereich von etwa 180°. Es wäre auch denkbar, dass das Lagerelement 24 das Halterungselement 12 um einen kleineren oder größeren Winkelbereich oder sogar vollständig umschließt. Die sich durch die Fenster 34 erstreckenden Abschnitte der Walzen 40 rollen auf der dem Halterungselement 12 benachbarten Fläche des Lagerelements 24 ab. Dadurch stellt das Lagerelement 24 dem Halterungselement 12 in vertikaler Richtung eine Abstützung bereit. Außerdem wird das Halterungselement 12 durch das Lagerelement 24 in Achsrichtung der Welle 10 fixiert, da das Lagerelement 24 sich zwischen den flanschartigen Bereichen 32 erstreckt.

Auch hier liegt ein Vorteil darin, dass ein relativ geringer Abstand der Zinkenträger 20 links und rechts des Halterungselements 12 möglich ist.

## Patentansprüche

1. Aufnehmer für landwirtschaftliches Erntegut mit einem Gehäuse (8), einer darin angeordneten und gegenüber dem Gehäuse (8) drehbar gelagerten und in Drehung versetzbaren Welle (10), Zinkenträgern (20), die sich parallel zur Welle (10) erstrecken, an den Zinkenträgern (20) befestigte Zinken (22), und mit einem koaxial zur Welle (10) angeordneten Halterungselement (12), an dem die Zinkenträger (20) aufgenommen sind, **dadurch gekennzeichnet, dass** das Halterungselement (12) am Gehäuse (8) drehbar gelagert ist.

2. Aufnehmer nach Anspruch 1, **dadurch gekennzeichnet, dass** das Halterungselement (12) durch drehbare Walzen (26, 40) am Gehäuse (8) abgestützt ist.

3. Aufnehmer nach Anspruch 2, **dadurch gekennzeichnet, dass** am Halterungselement (12) mit dem Gehäuse (8) verbundene Walzen (26) mit parallel zur Welle (10) verlaufenden Drehachsen anliegen.

4. Aufnehmer nach Anspruch 3, **dadurch gekennzeichnet, dass** an einem fest oder pendelnd am Gehäuse (8) befestigten Lagerelement (24) mindestens zwei am Halterungselement (12) anliegende Walzen (26) angebracht sind.

5. Aufnehmer nach Anspruch 2, **dadurch gekennzeichnet, dass** am Halterungselement (12) Walzen (40) drehbar gelagert sind, die an einem mit dem Gehäuse (8) verbundenen oder damit einteiligen Lagerelement (12) abrollen.

6. Aufnehmer nach Anspruch 5, **dadurch gekennzeichnet, dass** die Walzen (40) innerhalb von Öffnungen (28) des Halterungselements (12) angeordnet sind, und dass sich mit dem Gehäuse (8) bzw. dem Lagerelement (24) in Berührung kommende Abschnitte der Walzen (40) durch Fenster (34) der Öffnungen (28) radial über die benachbarte Oberfläche des Lagerelements (12) nach außen erstrecken.

7. Aufnehmer nach einem der vorhergehenden Ansprüche, **dadurch gekennzeichnet, dass** sich zumindest Teile eines mit dem Gehäuse (8) verbundenen Lagerelements (24) zwischen Bereichen (32) des Halterungselements (12) erstrecken, zwischen denen sich eine Nut (30) befindet, so dass das Halterungselement (12) durch das Lagerelement (24) in axialer Richtung der Welle (10) fixiert ist.

8. Aufnehmer nach einem der vorhergehenden Ansprüche, **dadurch gekennzeichnet, dass** die Zinkenträger (20) am Halterungselement (12) schwenkbar gelagert sind.

9. Aufnehmer nach einem der vorhergehenden Ansprüche, **dadurch gekennzeichnet, dass** die Zinkenträger (20) auf den beiden Seiten des Halterungselements (12) angeordnet und vorzugsweise zueinander winkelversetzt sind.

10. Aufnehmer nach einem der vorhergehenden Ansprüche, **dadurch gekennzeichnet, dass** das Halterungselement (12) etwa mittig auf der Welle (10) angeordnet ist.

## Claims

1. Pick-up for agricultural harvested crop, comprising a housing (8), a shaft (10) disposed therein, which is mounted rotatably relative to the housing (8) and can be set in rotation, tine bars (20), which extend parallel to the shaft (10), tines (22) fastened to the tine bars (20), and comprising a mounting element (12), disposed coaxially to the shaft (10), on which the tine bars (20) are accommodated, **characterized in that** the mounting element (12) is mounted rotatably on the housing (8).

2. Pick-up according to Claim 1, **characterized in that** the mounting element (12) is supported on the housing (8) by rotatable rollers (26, 40).

3. Pick-up according to Claim 2, **characterized in that** rollers (26) connected to the housing (8) and having rotational axes running parallel to the shaft (10) bear against the mounting element (12).

4. Pick-up according to Claim 3, **characterized in that** at least two rollers (26) bearing against the mounting element (12) are attached to a bearing element (24) fastened in fixed or rocking arrangement to the housing (8).

5. Pick-up according to Claim 2, **characterized in that** rollers (40) are mounted rotatably on the mounting element (12), which rollers roll against a bearing element (24) connected to the housing (8) and integral therewith.

6. Pick-up according to Claim 5, **characterized in that** the rollers (40) are disposed within openings (28) in the mounting element (12), and **in that** segments of the rollers (40) which come into contact with the housing (8) or the bearing element (24) extend through windows (34) of the openings (28) radially outwards over the adjacent surface of the bearing element (24).

7. Pick-up according to one of the preceding claims, **characterized in that** at least parts of a bearing element (24) connected to the housing (8) extend between regions (32) of the mounting element (12) between which a groove (30) is found, so that the mounting element (12) is fixed by the bearing element (24) in the axial direction of the shaft (10).

8. Pick-up according to one of the preceding claims, **characterized in that** the tine bars (20) are mounted pivotably on the mounting element (12).

9. Pick-up according to one of the preceding claims, **characterized in that** the tine bars (20) are disposed on both sides of the mounting element (12) and are preferably angularly offset to one another.

10. Pick-up according to one of the preceding claims, **characterized in that** the mounting element (12) is disposed roughly centrally on the shaft (10).

## Revendications

1. Ramasseur pour produits agricoles, comportant un carter (8), un arbre (10), monté dans le carter (8) de manière rotative par rapport à celui-ci et pouvant être entraîné en rotation, des porte-dents (20), qui s'étendent parallèlement à l'arbre (10), des dents (22) fixées sur les porte-dents (20), et comportant un élément de fixation (12), qui est agencé coaxialement à l'arbre (10) et sur lequel sont montés les porte-dents (20), **caractérisé en ce que** l'élément de fixation (12) est monté de manière rotative sur le carter (8).

2. Ramasseur selon la revendication 1, **caractérisé en ce que** l'élément de fixation (12) est en appui sur le carter (8) au moyen de galets (26, 40) rotatifs.

3. Ramasseur selon la revendication 2, **caractérisé en ce que** des galets (26), assemblés au carter (8) et avec des axes de rotation orientés parallèlement à l'arbre (10), sont en appui sur l'élément de fixation (12).

4. Ramasseur selon la revendication 3, **caractérisé en ce qu'**au moins deux galets (26), en appui sur l'élément de fixation (12), sont montés sur un élément de palier (24), attaché de manière fixe ou oscillante au carter (8).

5. Ramasseur selon la revendication 2, **caractérisé en ce que** des galets (40) sont montés de manière rotative sur l'élément de fixation (12), lesquels roulent sur un élément de palier (24) assemblé au carter (8) ou formé d'un seul tenant avec celui-ci.

6. Ramasseur selon la revendication 5, **caractérisé en ce que** les galets (40) sont agencés à l'intérieur d'orifices (28) de l'élément de fixation (12), et **en ce que** des parties des galets (40), entrant en contact avec le carter (8) ou l'élément de palier (24), s'étendent vers l'extérieur à travers des fenêtres (34) des orifices (28) dans le sens radial au-dessus de la surface adjacente de l'élément de palier (12).

7. Ramasseur selon l'une quelconque des revendications précédentes, **caractérisé en ce qu'**au moins des parties d'un élément de palier (24), assemblé au carter (8), s'étendent entre des zones (32) de l'élément de fixation (12), entre lesquelles se situe une rainure (30), de telle sorte que l'élément de fixation (12) est fixé dans le sens axial de l'arbre (10) au moyen de l'élément de palier (24).

8. Ramasseur selon l'une quelconque des revendications précédentes, **caractérisé en ce que** les porte-dents (20) sont montés de manière pivotante sur l'élément de fixation (12).

9. Ramasseur selon l'une quelconque des revendications précédentes, **caractérisé en ce que** les porte-dents (20) sont agencés sur les deux côtés de l'élément de fixation (12) et, de préférence, présentent un décalage angulaire entre eux.

10. Ramasseur selon l'une quelconque des revendications précédentes, **caractérisé en ce que** l'élément de fixation (12) est monté sensiblement au milieu sur l'arbre (10).
